Europäisches Patentamt

European Patent Office

Office européen des brevets

(11) Veröffentlichungsnummer: **0 163 092**
**B1**

(12) # EUROPÄISCHE PATENTSCHRIFT

(45) Veröffentlichungstag der Patentschrift:
30.03.88

(51) Int. Cl.⁴: **B 65 B 5/12**, B 65 B 35/38,
B 65 G 47/90

(21) Anmeldenummer: 85104601.1

(22) Anmeldetag: 16.04.85

(54) Vorrichtung zum Einlegen von Pralinen.

(30) Priorität: 09.05.84 DE 3417206

(43) Veröffentlichungstag der Anmeldung:
04.12.85 Patentblatt 85/49

(45) Bekanntmachung des Hinweises auf die Patenterteilung:
30.03.88 Patentblatt 88/13

(84) Benannte Vertragsstaaten:
CH DE FR GB IT LI SE

(56) Entgegenhaltungen:
DE - B - 1 211 985
DE - B - 1 255 025
DE - B - 1 288 000

(73) Patentinhaber: "LOESCH"-Verpackungstechnik GmbH
& Co. KG, Industriestrasse 1, D-8602 Altendorf (DE)

(72) Erfinder: Adler, Michael, Konradstrasse 12,
D-8550 Forchheim (DE)
Erfinder: Wienmeier, Johannes, Erlenweg 22, D-4505 Bad
Iburg (DE)
Erfinder: Hammacher, Heinz-Peter, Bamberger Ring 64,
D-8600 Bamberg (DE)

(74) Vertreter: Lehmann, Klaus, Dipl.-Ing. et al,
Patentanwälte Schroeter & Lehmann
Postfach 70 17 47 Lipowskystrasse 10,
D-8000 München 70 (DE)

## Beschreibung

Die Erfindung betrifft eine Vorrichtung zum gleichzeitigen Einlegen mehrerer Pralinen in die Formvertiefungen von Packungseinsätzen, entsprechend dem Oberbegriff des Anspruchs 1.

Es sind in der Praxis mechanisch arbeitende Mehrfach-Einlegevorrichtungen dieser Art bekannt, mit denen jeweils eine Praline an einer bestimmten Position einer Zuführbahn aufgenommen und in einer anderen bestimmten Position in einem Packungseinsatz abgelegt werden kann. Diese Mehrfach-Einlegevorrichtungen können dem jeweiligen Packungsspiegel, also der Stellung der einzelnen Pralinen in dem Packungseinsatz, entsprechend fest eingerichtet werden, so dass grössere Serien gleichartiger Packungseinsätze nacheinander mit Pralinen belegt werden können. Umstellungen des Packungsspiegels, also eine Veränderung der Einlegeposition einzelner oder mehrerer Pralinen in dem Packungseinsatz, erfordern aber sehr zeitaufwendige und damit kostspielige manuelle Umstellungsarbeiten.

Es sind auch bereits frei programmierbare Einlegevorrichtungen bekannt, mit denen jeweils nur eine einzige Praline pro Gerät oder maximal zwei identische Pralinen nebeneinander und parallel zueinander eingelegt werden können. Es handelt sich hierbei um roboterartige Einlegevorrichtungen mit Schwenkarmen, die verhältnismässig teuer sind und langsam arbeiten. Ausserdem benötigen diese Einlegevorrichtungen für jede Praline oder Pralinenart eine separate Zuführvorrichtung, so dass sich ein entsprechender Raumbedarf bei hohen Kosten ergibt. Diese roboterartige Vorrichtung kann jeweils so programmiert werden, dass sie eine einzige Praline an einer bestimmten Stelle aufnimmt und an einer anderen bestimmten Stelle ablegt, wobei durch Änderungen des Programms die Aufnahme- und Ablegestellen verändert werden können. Für die Verarbeitung mehrerer unterschiedlicher Pralinensorten, also für das Füllen von Packungseinsätzen, die beispielsweise zwanzig oder mehr Pralinen verschiedener Sorten aufnehmen sollen, ist diese bekannte Vorrichtung wegen des hohen Bedarfs an Raum und Kosten wenig geeignet.

Eine Vorrichtung nach dem Oberbegriff des Patentanspruchs 1 ist aus der DE-B-1 255 025 bekannt. Hierbei sind mehrere einzelne, getrennt voneinander angeordnete Einlegevorrichtungen für jeweils nur eine Pralinensorte vorgesehen. Diese Einrichtungen bestehen jeweils aus einem Untergestell, indem in diesem quer verfahrbaren Zwischengestell, einem auf diesem längs verfahrbaren Obergestell, einem Antriebsmotor, einem breiten Förderband, einem diesem nachgeschalteten schmalen, zweiteiligen Förderband, einer Zange, einem um 180° schwenkbaren Ladearm und einem Schwenkkopf mit zwei um 180° schwenkbaren Greifringen für die Pralinen. Diese Einlegevorrichtungen sind in zwei zueinander rechtwinklig verlaufenden Richtungen so verstellbar, dass die gesamte Grundfläche der Packungen mit den Greifringen erreichbar ist. Zu diesem Zweck sind am Untergestell, am Zwischengestell und am Obergestell Schienen und Rollen angeordnet, mit denen die Gestelle gegeneinander verfahrbar sind. Die Verstellung der Gestelle wird mittels zweier Elektromotoren über Ketten und Kettenräder sowie Gewindespindeln vorgenommen. Dabei erfolgt die Einstellung der Einlegevorrichtungen in bezug auf die Packungen mittels einer numerischen Steuerung. Da hierbei jede Einlegevorrichtung für sich allein und getrennt und mit Abstand von den anderen Einlegevorrichtungen angeordnet ist, ergibt sich für die gesamte Vorrichtung ein entsprechend hoher Raum- und Kostenaufwand. Ausserdem ist auch der konstruktive Aufbau jeder einzelnen Einlegevorrichtung sehr aufwendig.

Die Aufgabe der Erfindung besteht demgegenüber darin, eine Vorrichtung der im Oberbegriff des Anspruchs 1 genannten bekannten Art raum- und kostensparend als Mehrfach-Einlegevorrichtung auszugestalten, wobei trotzdem sichergestellt sein soll, dass der Packungsspiegel, also die Stellung der einzelnen Pralinen in dem Packungseinsatz, flexibel gestaltet und ohne zeitaufwendige Umrüstarbeiten leicht und schnell verändert werden kann.

Die erfindungsgemässe Lösung dieser Aufgabe ergibt sich aus Patentanspruch 1.

Mit einer solchen Vorrichtung können mehrere verschiedene Pralinen gleichzeitig aus den Zuführbahnen entnommen und in den Packungseinsatz eingelegt werden. Es können auch aus einer einzigen Zuführbahn zwei oder mehr gleichartige Pralinen aufgenommen und in verschiedenen Positionen des Packungseinsatzes abgelegt werden. Durch die freie Programmierbarkeit jedes einzelnen Greifers lassen sich alle erforderlichen Bewegungen leicht einstellen und schnell verändern, so dass auch kleine Serien gleichartiger Packungseinsätze und ggf. sogar unterschiedliche Verpackungseinsätze durcheinander mit Hilfe der Programmsteuerung verarbeitet werden können, wodurch die Einrichtung sehr flexibel einsetzbar ist. Trotzdem können an einer Einlegestation mehrere Pralinenarten gleichzeitig eingelegt werden, so dass sich die Gesamtlänge einer Anlage zum Füllen eines Verpackungseinsatzes, die mehrere Einlegestationen hintereinander aufweist, entsprechend reduzieren lässt. Die erfindungsgemässe Vorrichtung lässt sich also sehr kompakt bauen und ermöglicht somit eine Einsparung an benötigter Grundfläche und eine entsprechende Kosteneinsparung.

Die Unteransprüche kennzeichnen vorteilhafte Weiterbildungen der Erfindung.

Da die Entnahmestellungen für die Pralinen aus den Zuführbahnen nicht für alle Pralinensorten gleich sind, ist es vorteilhaft, wenn gemäss Anspruch 2 auch die Entnahmestellungen für die Greifer einzeln frei programmierbar sind.

Eine baulich besonders vorteilhafte und kompakte Ausführung lässt sich erzielen, wenn die Einlegeeinheiten gemäss Anspruch 3 oder Anspruch 4 ausgebildet und angeordnet sind. Wenn gemäss Anspruch 5 für den Greifer für die Bewegung in der ersten Richtung y ein Zahnriemenantrieb oder ein ähnlicher formschlüssiger Antrieb vorgesehen ist, lässt sich eine besonders genaue Steuerung der Greifer erzielen. Ein Zahnriemenantrieb ist deswegen vorteilhaft, weil in der ersten Richtung y nur kleine Massen zu bewegen sind, so dass der jeweilige Greifer entsprechend schnell beschleunigt und verzögert werden kann. Bei anderen Antriebsarten, beispielsweise mittels einer Schraubenspindel, lässt sich der Greifer nicht so schnell beschleunigen oder abbremsen, so dass damit nicht so hohe Betriebsgeschwindigkeiten erreicht werden können.

In der zu der ersten Richtung y senkrechten zweiten Richtung x ist dagegen der jeweilige Greifer zusammen mit der Einlegeeinheit als Ganzes in vorteilhafter Weise gemäss Anspruch 6 bewegbar angeordnet. Im Gegensatz zu der ersten Richtung y liegen hier nur kurze Bewegungswege vor, so dass man verhältnismässig mehr Zeit für die Beschleunigung und die Abbremsung des Greifers in der zweiten Richtung x mit der Einlegeeinheit zur Verfügung hat. Für den Antrieb der Einlegeeinheit mit dem Greifer in der zweiten Richtung x, wobei grössere Massen als in der ersten Richtung y zu bewegen sind, ist beispielsweise eine Kraftübertragung mittels Zahnrad und Zahnstange zweckmässig.

Räumlich besonders günstige Verhältnisse ergeben sich bei einer Ausbildung der Vorrichtung nach den Ansprüchen 7 und 8.

Wenn die einzelnen Greifer zusätzlich zu den Bewegungen in den beiden genannten Richtungen y und x auch Hub- und Senkbewegungen für das Aufnehmen und Ablegen der Pralinen oder Drehbewegungen zum Verdrehen der Pralinen um eine lotrechte Achse ausführen müssen, ist eine Ausbildung gemäss Anspruch 9 zweckmässig. Hierbei können dann gemäss Anspruch 10 auch diese Bewegungen einzeln frei programmiert werden.

Schliesslich ist es gemäss Anspruch 11 möglich, für jede Einlegeeinheit mehrere Greifer vorzusehen, die jeweils gegenüber der Einlegeeinheit selbst in beiden Richtungen x und y bewegbar angeordnet sind, so dass die Vielseitigkeit und Einsatzmöglichkeit der erfindungsgemässen Vorrichtung entsprechend erweitert wird.

Weitere Einzelheiten der Erfindung ergeben sich aus der folgenden Beschreibung eines Ausführungsbeispiels anhand der Zeichnung.

Fig. 1 ist eine schematische Draufsicht auf eine erfindungsgemässe Vorrichtung;

Fig. 2 ist eine Seitenansicht der Vorrichtung von Fig. 1 in y-Richtung, gesehen entgegengesetzt zu der Zuführrichtung Y in Fig. 1;

Fig. 3 ist eine Seitenansicht der Vorrichtung von Fig. 1 in x-Richtung, gesehen entgegengesetzt zu der Förderrichtung X in Fig. 1;

Fig. 4 veranschaulicht ein Beispiel eines Packungsspiegels in einer Draufsicht auf einen Packungseinsatz;

Fig. 5 ist eine der Fig. 3 entsprechende Seitenansicht einer abgewandelten Ausführungsform;

Fig. 6 ist eine vergrösserte Ansicht, teilweise im Schnitt, des unteren Teils der Darstellung von Fig. 5.

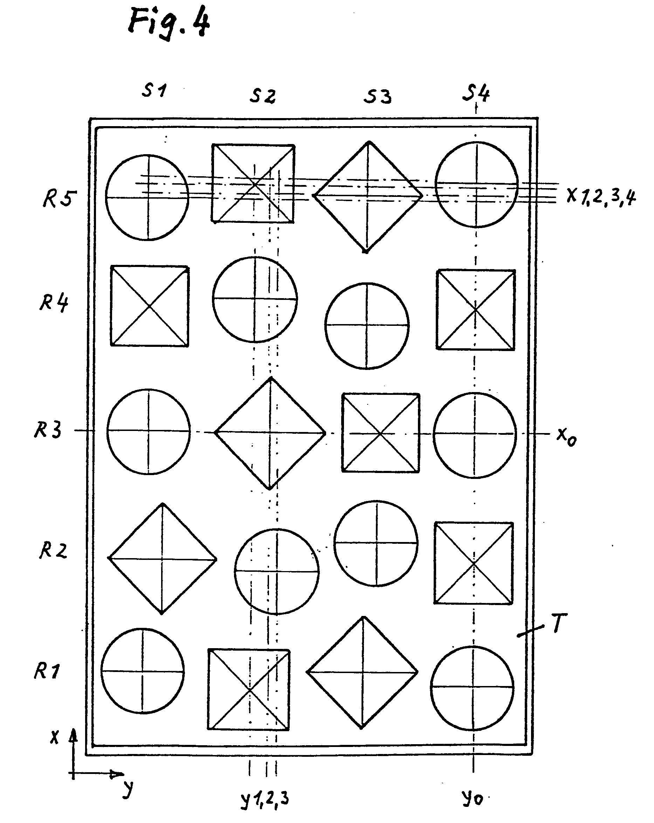

Zunächst soll anhand der Fig. 4 die mögliche Anordnung von Pralinen in einem Packungseinsatz oder Tray T erläutert werden. Es sei angenommen, dass der Verpackungseinsatz T fünf Pralinenreihen R1, R2... in vier Spalten S1, S2..., insgesamt also zwanzig Pralinen aufnimmt. Die Pralinen können, wie in Fig. 4 gezeigt, unterschiedliche Grundrissformen haben. Um ein ansprechendes Packungsbild zu erzielen, ist es erwünscht, die Pralinen in den Reihen und in den Spalten nicht immer auf einer Linie, sondern, je nach Form und Orientierung der Pralinen, in den Richtungen x und y geringfügig gegenüber den Reihen und Spalten versetzt anzuordnen. So sind bei dem in Fig. 4 dargestellten Ausführungsbeispiel in der Reihe R5 die Pralinen in den Spalten S1 bis S4 jeweils mit ihren Mittelpunkten gegeneinander versetzt. Die Pralinen der Reihe R5 liegen also auf vier verschiedenen Koordinaten $x_{1, 2, 3, 4}$. In ähnlicher Weise liegen die Pralinen zum Beispiel in der Spalte S2 nicht auf einer y-Koordinate, sondern sie sind gegeneinander teilweise versetzt und liegen auf den drei Koordinaten $y_{1, 2, 3}$. Dagegen liegen beispielsweise in der Reihe R3 alle vier Pralinen auf der gleichen Koordinate $x_0$, und in der Spalte S4 liegen beispielsweise alle Pralinen auf der Koordinate $y_0$. Durch die Erfindung soll es ermöglicht werden, Packungseinsätze oder Trays T unterschiedlicher Arten mit Pralinen zu belegen und hierzu die Einlegevorrichtung, die die Pralinen an den verschiedenen x- und y-Koordinaten ablegen muss, entsprechend flexibel und leicht verstellbar auszubilden.

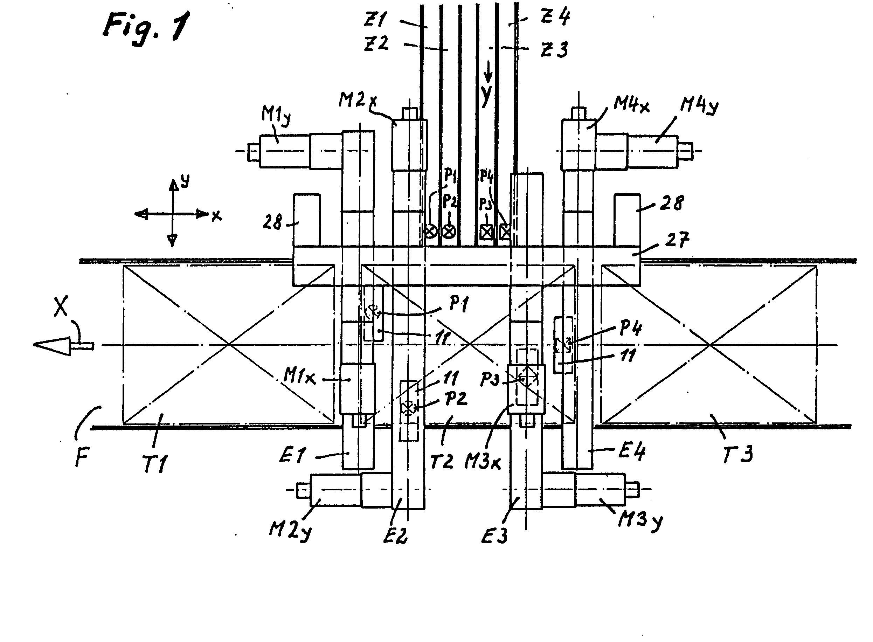

Die Fig. 1 bis 3 zeigen eine Einlegestation mit vier Einlegeeinheiten E1 bis E4, mit der also vier Pralinen gleichzeitig in einen Packungseinsatz T eingelegt werden können. Wenn ein Packungseinsatz T mit zwanzig Formvertiefungen, wie in Fig. 4 gezeigt, gefüllt werden soll, sind also fünf gleichartige Einlegestationen hintereinander notwendig, deren Einlegeeinheiten bzw. Greifer jeweils auf den Packungsspiegel des Verpackungseinsatzes T eingestellt werden müssen.

Die grundsätzliche Anordnung der Einlegevorrichtung ist in Fig. 1 veranschaulicht. Auf parallelen Zuführbahnen Z1, Z2... werden hintereinander jeweils mehrere gleichartige Pralinen verschiedener Sorten P1, P2... in der Förderrichtung Y zugeführt. Es ist jeweils nur die erste Praline P1, P2... jeder Kolonne in jeder Zuführbahn Z1, Z2... dargestellt. Die Pralinen P1, P2... sollen in Verpackungseinsätze oder Trays T1, T2... überführt werden, die hintereinander quer zu der Zuführrichtung Y auf einer Förderbahn F in Richtung des Pfeiles X schrittweise vorwärtsbewegt werden. Die Pralinen P1, P2... sollen also beispielsweise an den gestrichelt gezeigten Stellungen im Tray T2 abgelegt werden. In vorhergehenden bzw. nachfolgenden Einlegestationen werden jeweils wiederum mehrere weitere Pralinen eingelegt, bis die Trays T1, T2... gefüllt sind.

An jeder Einlegestation, von denen eine in den Fig. 1 bis 3 gezeigt ist, sind mehrere, beispielsweise vier Einlegeeinheiten E1, E2... vorgesehen, die jeweils einen Greifer G1, G2... für die Pralinen tragen. Es kann sich um mechanische Greifer oder um mit Saug- und Druckluft betriebene Saugköpfe handeln. Mit dem Begriff «Greifer» werden in der vorliegenden Beschreibung beide Arten von Greiforganen bezeichnet, die die Pralinen aus den Zuführbahnen Z1, Z2... ergreifen, anheben und zu dem jeweiligen Verpackungseinsatz T1, T2... überführen und in die zugehörige Formvertiefung ablegen.

An jeder Einlegeeinheit E1, E2... ist der zugehörige Greifer G1, G2... in der Richtung y, die der Zuführrichtung Y der Zuführbahnen Z1, Z2... entspricht, hin und her beweglich geführt.

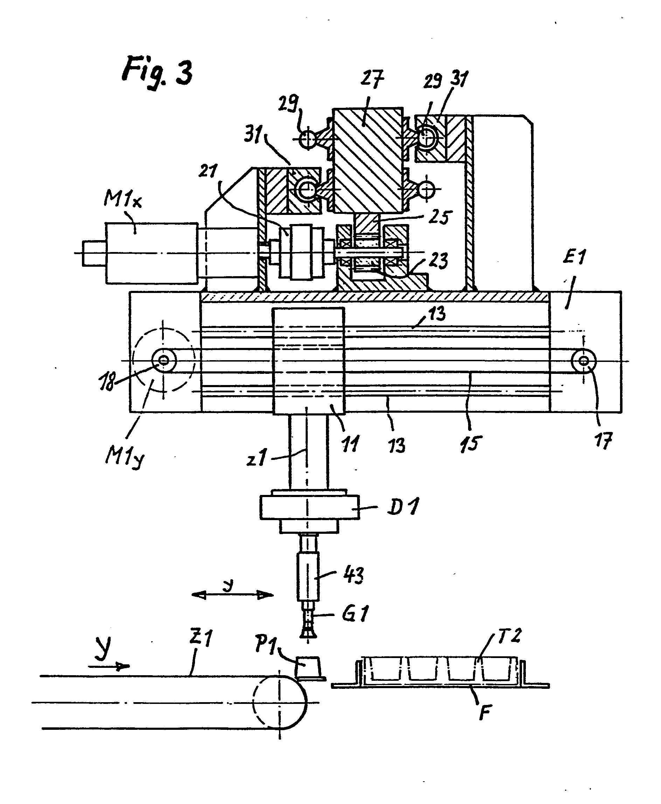

Wie insbesondere Fig. 3 zeigt, ist beispielsweise der Greifer G1 von einem Führungsblock 11 getragen, der an zwei an der Einlegeeinheit E1 angebrachten Linearführungen oder Führungsstangen 13 in Richtung y hin und her verschiebbar ist. Die Verschiebung erfolgt über einen an dem Führungsblock 11 befestigten Zahnriemen 15, der über Zahnräder 17, 18 läuft, von denen das Zahnrad 18 auf der Welle eines von der Einlegeeinheit E1 getragenen Antriebsmotors M1y sitzt. Durch entsprechende Steuerung des Motors M1y ist der Greifer G1 in Richtung y hin und her bewegbar, um die Pralinen P1 von der Zuführbahn Z1 beispielsweise in eine Formvertiefung des Packungseinsatzes T2 auf der Förderbahn F zu überführen.

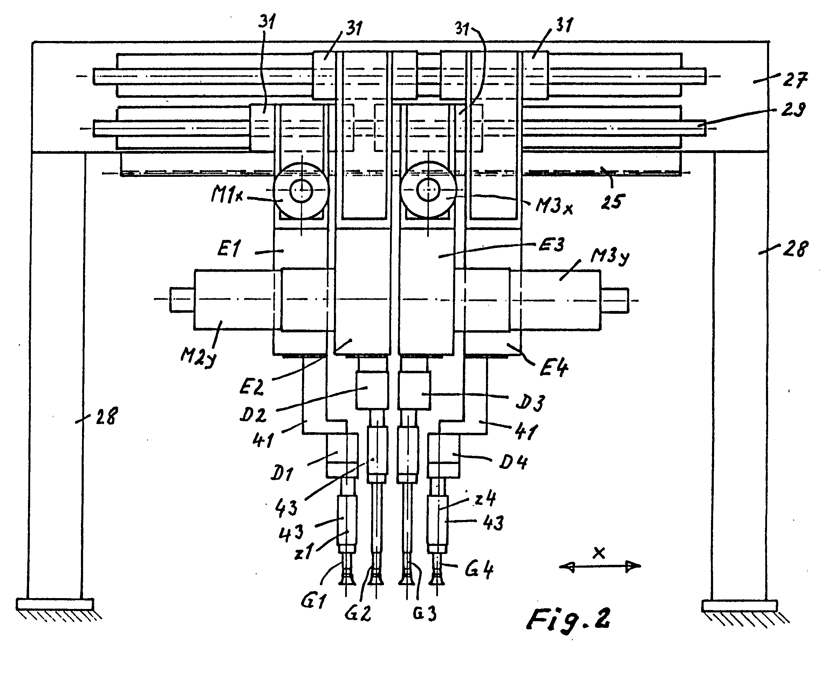

Zusätzlich zu der Bewegung in y-Richtung muss jedoch der Greifer G1 auch eine Bewegung in x-Richtung ausführen, wie sich aus Fig. 1 ergibt. Hierzu ist an der Einlegeeinheit E1 ein zweiter Motor M1x vorgesehen, der über eine Kupplung 21 ein Zahnrad 23 antreibt, das an der Einlegeeinheit E1 gelagert ist und in eine Zahnstange 25 eingreift, die an einer ortsfesten Zentralführung 27 befestigt ist. Die Zentralführung 27 ist auf Stützen 28 (Fig. 2) abgestützt. An der Zentralführung 27 sind Führungsstangen 29 befestigt, auf denen die Einlegeeinheit E1 mit Hilfe von Linearführungsblöcken 31 hin und her verschiebbar angeordnet ist. Auf diese Weise kann der Greifer G1 durch entsprechende Steuerung des Motors M1x die erforderliche Bewegung in x-Richtung von der Aufnahmestellung der Praline P1 aus der Zuführbahn Z1 zu der Ablagestelle im jeweiligen Verpackungseinsatz ausführen.

Mit Hilfe einer nicht dargestellten Programmsteuerung ist der Greifer G1 in seinen x- und y-Bewegungen derart frei programmierbar, dass er (innerhalb gewisser Grenzen) die Praline P1 an der gewünschten oder vorgegebenen Stelle aus der Zuführbahn Z1 aufnehmen und diese Praline an einer vorbestimmten oder gewünschten Stelle in dem Packungseinsatz T1, T2... ablegen kann.

Für die Hubbewegung beim Aufnehmen der Praline P1 aus der Zuführbahn Z1 und für das Absetzen der Praline P1 im Packungseinsatz, T1, T2... ist der Greifer G1 zusätzlich gegenüber der Einlegeeinheit E1 in lotrechter Richtung beweglich gelagert. Die Steuerung dieser Bewegung kann pneumatisch erfolgen. Vorteilhaft ist es jedoch, auch diese Bewegung frei programmiert zu steuern.

Schliesslich kann es erforderlich sein, die Pralinen bei der Überführung von der Zuführbahn in den Packungseinsatz um ihre lotrechte Achse zu verdrehen, wie es für die Praline P3 in Fig. 1 gezeigt ist. Hierzu dient eine Dreheinrichtung D1 für den Greifer G1, mit deren Hilfe der Greifer G1 um die lotrechte Achse z1 verdreht werden kann. Die Dreheinrichtung D1 kann ebenfalls pneumatisch gesteuert sein. Es ist jedoch vorteilhaft, auch diese Dreheinrichtung D1 über die Programmsteuerung frei programmierbar zu machen. Insgesamt kann also der Greifer G1 vier verschiedene Bewegungen ausführen, die je für sich frei programmierbar sind, nämlich die Horizontalbewegungen in den Richtungen x und y, die Hubbewegung in Richtung der Achse z1 und die Drehbewegung um die Achse z1.

Beim Betrieb der Vorrichtung werden also die einzelnen Pralinen P1 am Ende der Zuführbahn Z1 aufgestaut, vereinzelt und durch den Greifer G1 nach oben abgehoben und entsprechend den vorgegebenen x-y-Koordinaten über den Packungseinsatz T2 verfahren. Während dieser Bewegung wird ggf. eine Drehbewegung um die Achse z1 mit Hilfe der Dreheinrichtung D1 ausgeführt. Nach dem Erreichen der Ablageposition wird die Praline P1 in den Packungseinsatz T2 abgelegt. Sofern der Greifer G1 als Sauger ausgebildet ist, wird hierbei das Vakuum abgeschaltet und Druckluft zum Freigeben der Praline P1 eingeschaltet. Nach dem Ablegen der Praline P1 in dem Packungseinsatz T2 fährt der Greifer G1 in die Aufnahmeposition über die nächste Praline P1 in der Zuführbahn Z1 zurück, der nächste Packungseinsatz bzw. das nächste Tray T3 wird um einen Schaltschritt vorwärtsbewegt, und es beginnt der nächste Einlegevorgang.

Alle geschilderten Bewegungsabläufe sind optimal aufeinander abgestimmt und laufen, soweit möglich, gleichzeitig ab.

Die Programmierung der einzelnen Bewegungen des Greifers G1 zwischen der Aufnahmestellung P1 über der Zuführbahn Z1 bis zu der Ablagestellung P1 in dem Tray T2 erfolgt über ein in der Zeichnung nicht dargestelltes Mikroterminal. Hier müssen lediglich anhand der Koordinaten des Packungsspiegels in der Trays T1, T2... die x- und y-Koordinaten für die Ablageposition sowie ggf. der Drehbefehl für den Greifer G1 eingegeben werden. Die Aufnahmestellung P1 über der Zuführbahn Z1 kann fest vorprogrammiert oder, falls erforderlich, frei programmierbar sein. Es ist auch eine Programmierung im «Teach-in-Modus» möglich, d. h. der Greifer wird an die gewünschte Ablageposition über dem Tray T2 gefahren und diese Position als Parameter für die notwendigen Bewegungen über das Terminal abgespeichert. Sämtliche eingegebenen Daten können unter einer zu dem jeweiligen Tray gehörigen Programmnummer in einem Speicher abgelegt und jederzeit wieder abgerufen werden.

Die für die Einlegeeinheit E1 mit dem Greifer G1 vorstehend gegebene Beschreibung trifft in gleicher bzw. in entsprechender Weise für die weiteren, in der Zeichnung dargestellten Einlegeeinheiten E2, E3 und E4 zu. Gleiche oder entsprechende Teile sind also jeweils mit der Ziffer 2, 3 oder 4 bezeichnet. Die Zahl von vier Einlegeeinheiten zur Überführung von vier Pralinen gleichzeitig ist nur als Beispiel anzusehen. Die Vorrichtung kann auch weniger und insbesondere mehr als vier Einlegeeinheiten an einer Einlegestation aufweisen.

Mit der erfindungsgemässen Einlegevorrichtung lässt sich eine hohe Taktzahl von etwa 40 bis 60 Pralinen pro Minute pro Greifer (je nach Pralinenart und Grösse des Packungseinsatzes) erzielen.

Die Programmierung für die Greiferbewegung lässt sich einfach durchführen und mit einer Genauigkeit von etwa ± 0,3 mm bei der praktischen Ausführung der Greiferbewegungen wiederholen, was für die Praxis ausreichend ist. Die Antriebsmotore M1x, M1y, M2x, M2y ... können mittels Gleichstrom angetrieben werden. Die Streckenmessung kann mittels Inkrementalgebern erfolgen. In y-Richtung müssen nur kleine Massen bewegt werden, nämlich der Führungsblock 11 mit dem Greifer G1 und der erfassten Praline, so dass hier über den Zahnriementrieb 15, 17, 18 hohe Geschwindigkeiten erreichbar sind. In x-Richtung ist mit dem Greifer G1 jeweils die gesamte Einlegeeinheit E1 zu verschieben, so dass hier über den Zahnradantrieb 23, 25 wegen der kürzeren Wege geringere Geschwindigkeiten ausreichen. Die Hubhöhe der Greifer kann etwa 25 mm betragen, und für die Drehung um die z1-Achse ist maximal ein Drehwinkel von 180° erforderlich, so dass sehr kurze Zykluszeiten erreichbar sind.

Die gesamte Einrichtung ist also einfach, wenig störungsanfällig und wartungsfreundlich aufgebaut. Sie besteht aus mehreren gleichartigen oder ähnlichen Einheiten, bietet also einen modularen Aufbau mit Erweiterungs- und Anpassungsmöglichkeiten sowie eine kompakte, platzsparende Bauweise.

Auch die elektronische Programmsteuerung kann modular aufgebaut sein. Als Hardware sind im wesentlichen erforderlich: ein Master-Prozessor für die Ablaufsteuerung und die Funktionsüberwachung, eine I/O-Karte als Bindeglied zwischen dem Rechner und der Mechanik, ein Drehzahl- und Lageregler (Prozessor) für jede Bewegungsachse sowie die zugehörigen Leistungsendstufen. Auch die Software der Programmsteuerung ist modular aufgebaut und umfasst die Teilprogramme: Betriebs-Software, achsentypische Software für die vier Bewegungsachsen, Programmierung.

Wie insbesondere die Fig. 1 und 2 zeigen, sind die Bauteile der vier Einlegeeinheiten E1, E2... miteinander weitgehend verschachtelt, damit eine eng nebeneinanderliegende Anordnung der Greifer beim Aufnehmen der Pralinen P1, P2... aus den Zuführbahnen Z1, Z2... möglich ist. Aus dieser eng verschachtelten Stellung, die in Fig. 2 gezeigt ist, werden die vier Einlegeeinheiten in x-Richtung zum Ablegen der Pralinen in den Trays T1, T2... auseinander gefahren, wie Fig. 1 zeigt.

So sind beispielsweise die Motoren M1y und M4y an dem den Zuführbahnen Z1, Z4 benachbarten Ende der Einlegeeinheiten E1 und E4 seitlich nach aussen vorragend angeordnet, während die Motoren M2y und M3y an den von den Zuführbahnen Z1, Z2... abgewandten Enden der Einlegeeinheiten E2 und E3 auf der anderen Seite der Vorrichtung nach aussen vorragend jenseits der Enden der Einlegeeinheiten E1 und E4 angeordnet sind. Die Motoren für die Bewegungen in der x-Richtung können jeweils oberhalb oder unterhalb der Einlegeeinheiten E1, E2... angeordnet sein. Fig. 2 zeigt die Anordnung der Motoren M1x und M3x oberhalb der Einlegeeinheiten E1 und E3. Fig. 2 zeigt ebenfalls eine Verschachtelung der Linearführungsblöcke 31 der vier Einlegeeinheiten E1, E2... derart, dass je zwei Führungsblöcke 31 für die Einlegeeinheiten E1 und E3 auf der einen Seite der Vorrichtung an unteren Führungsstangen 29 und, wie Fig. 3 zeigt, auf der gegenüberliegenden Seite der Vorrichtung an obenliegenden Führungsstangen 29 geführt sind. Für die Linearführungsblöcke 31 der Einlegeeinheiten E2 und E4 gilt das Umgekehrte. Diese Führungsblöcke 31 laufen also auf den in Fig. 3 nicht besetzten Führungsstangen 29.

Schliesslich können auch, wie Fig. 2 zeigt, die Greifer und ihre Tragorgane und Dreheinrichtungen miteinander verschachtelt sein. Bei den beiden mittleren Greifern G2 und G3 sind beispielsweise die Dreheinrichtungen D2 und D3 oberhalb der schräg darunter befindlichen Dreheinrichtungen D1 und D4 für die Greifer G1 und G4 angeordnet. Diese Greifer G1 und G4 sind über abgewinkelte Träger 41 an den Einlegeeinheiten E1 und E4 angebracht, so dass mit Hilfe der Träger 41 die Greifer im verschachtelten Zustand für die Aufnahme der Pralinen aus den Zuführbahnen eng aneinander herangeführt werden können, wie es Fig. 2 zeigt. Bei der Ausbildung der Greifer als Saugköpfe sind zusätzlich (Fig. 2) Anschlüsse 43 für Saug- und Druckluft vorgesehen, die ebenfalls in unterschiedlichen Höhenlagen angeordnet sein können, wie Fig. 2 zeigt, damit sie sich im Betrieb nicht gegenseitig behindern. Die Bauelemente 43 können ausserdem die programmgesteuerten oder pneumatisch gesteuerten Hub- und Senkeinrichtungen für die Greifer G1, G2... aufnehmen.

Statt eines Greifers können an einer oder mehreren Einlegeeinheiten auch zwei oder mehr Greifer vorgesehen sein. Damit können beispielsweise mittels einer einzigen Einlegeeinheit gleichzeitig vier Pralinen aufgenommen und über den zugehörigen Packungseinsatz geführt werden, wo die Pralinen beispielsweise einzeln nacheinander an unterschiedlichen Positionen abgelegt werden. Auf diese Weise muss nur einmal der lange Verschiebeweg in Richtung y durchgeführt werden, während die unterschiedlichen kurzen Verschiebewege in x-Richtung von der einen Einlegeeinheit oder nur von ihren Greifern unmittelbar nacheinander über dem Packungseinsatz durchgeführt werden. Auch bei dieser Anordnung sind die Bewegungen der mehreren Greifer einzeln frei programmierbar. Die Investitionskosten vermindern sich jedoch, weil für mehrere Greifer jeweils nur eine Einlegeeinheit erforderlich ist. Die Taktzeit der Maschine wird dadurch möglicherweise geringfügig länger. Die kompakte Anordnung wird aber verbessert, und man kommt mit weniger Einlegestationen hintereinander aus. Die Flexibilität der Vorrichtung wird hierdurch also weiter verbessert.

Die parallel nebeneinander angeordneten Einlegeeinheiten E1, E2... haben in y-Richtung eine solche Länge, dass jede Einlegeeinheit E1, E2... von dem Bereich über dem Ende der zugeordneten Zuführbahn Z1, Z2... bis über die der jeweiligen Zuführbahn abgewandte Seite der Packungseinsätze T1, T2... hinwegreicht, und die Greifer G1, G2... sind jeweils mittels eines Motors M1y, M2y... längs der zugehörigen Einlegeeinheit E1, E2... in der y-Richtung bewegbar angeordnet. Dagegen ist jede Einlegeeinheit E1, E2... als Ganzes mit ihrem zugehörigen Greifer G1, G2... mittels des zweiten Motors M1x, M2x... in der x-Richtung parallel zur Richtung der Förderbahn F der Packungseinsätze T1, T2... bewegbar angeordnet. Um die geschilderte Verschachtelung zu ermöglichen, ist die Breite der Einlegeeinheiten E1, E2... in der x-Richtung etwa gleich dem Abstand zwischen zwei benachbarten Reihen R1, R2... von Formvertiefungen in den Packungseinsätzen T1, T2..., wobei eine möglichst geringe Breite der Einlegeeinheiten E1, E2... in x-Richtung vorteilhaft ist, um eine so enge Verschachtelung zu ermöglichen, dass bei eng nebeneinander liegenden Einlegeeinheiten E1, E2... ein einwandfreies Aufnehmen der Pralinen P1, P2... aus den Zuführbahnen Z1, Z2... möglich ist.

Wenn an einer Einlegeeinheit E1, E2... mehrere Greifer vorgesehen sind, können diese in der y-Richtung hintereinander auf einer Linie oder auch quer dazu in x-Richtung versetzt oder nebeneinander angeordnet sein. Diese mehreren Greifer pro Einlegeeinheit können dann unabhängig voneinander über die Programmsteuerung in y-Richtung verschiebbar sein. Sie können ggf. auch quer dazu, also in x-Richtung mittels der Programmsteuerung unabhängig voneinander gegenüber der jeweiligen Einlegeeinheit bewegbar sein, um auf diese Weise eine grösstmögliche Flexibilität hinsichtlich der Bewegungs- und Steuerungsmöglichkeiten der Greifer zur Anpassung ihrer Bewegung an unterschiedliche Packungseinsätze zu erzielen.

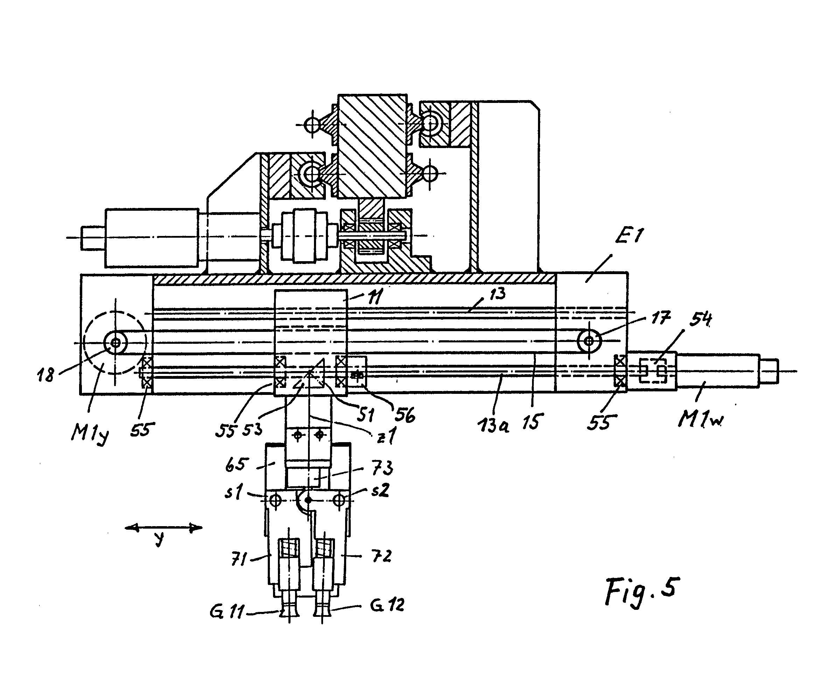

Bei der abgewandelten Ausführungsform gemäss Fig. 5 ist ein zusätzlicher Stellmotor M1w seitlich an der Einlegeeinheit E1 angebracht, der über eine Kupplung 54 mit der unteren Führungsstange 13a des Führungsblocks 11 verbunden ist. Diese Führungsstange 13a ist somit drehbar angeordnet und an den Enden der Einlegeeinheit E1 sowie in dem Führungsblock 11 in Lagern 55 drehbar gelagert. Ferner ist seitlich des Führungsblocks 11 ein zusätzliches kombiniertes Lager 56 für die Linearführung des Führungsblocks 11 längs der Führungsstange 13a und für die Übertragung des Drehmoments von der Führungsstange 13a angeordnet. Dieses Drehmoment wird auf ein auf die Führungsstange 13a aufgesetztes Kegelrad 51 übertragen, das mit einem in dem Führungsblock 11 gelagerten weiteren Kegelrad 53 zusammenarbeitet, dessen Achse z1 lotrecht nach unten gerichtet ist. Somit wird über das Getriebe 51, 53 die Drehbewegung des Stellmotors M1w von der Führungsstange 13a nach unten auf einen im folgenden im einzelnen zu beschreibenden Greiferkopf 65 mit den beiden Greifern G11 und G12 übertragen. Je nach Programmsteuerung des Stellmotors M1w können also die Greifer G11, G12 eine Drehbewegung um die lotrechte Achse z1 ausführen, um beispielsweise Pralinen in einer gegenüber den Zuführbahnen Z1... verdrehten Lage in die Trays T1... einzusetzen.

Die in Fig. 5 veranschaulichte Drehanordnung ist bei Verwendung nur eines Greifers pro Einlegeeinheit (wie in Fig. 3 gezeigt) in entsprechender Weise einsetzbar. In gleicher Weise ist diese Drehanordnung auch bei den anderen Einlegeeinheiten E2, E3 oder E4 einsetzbar.

Durch diese Konstruktion ist die Anordnung des Drehantriebs (Stellmotor) für die Drehbewegung des oder der Greifer aussen an der Einlegeeinheit möglich, so dass diese insgesamt und insbesondere der Führungsblock 11 schmal und leicht ausgeführt werden kann. Es bleibt also der Vorteil erhalten, dass für die schnelle Bewegung der Greifer in y-Richtung nur geringe Massen zu beschleunigen sind. Die Masse des zusätzlich vorgesehenen Stellmotors M1w befindet sich an der Einlegeeinheit E1 und ist mit dieser in x-Richtung bewegbar, in der wegen der grösseren Massen nur eine langsame Bewegung über kleine Wege vorgesehen ist. Der besondere Vorteil dieser Ausführungsform besteht darin, dass am Führungsblock 11 oder am Greiferkopf 65 keine zusätzlichen zu beschleunigenden Massen und damit auch keine Energiezuführungsleitungen angebracht sind.

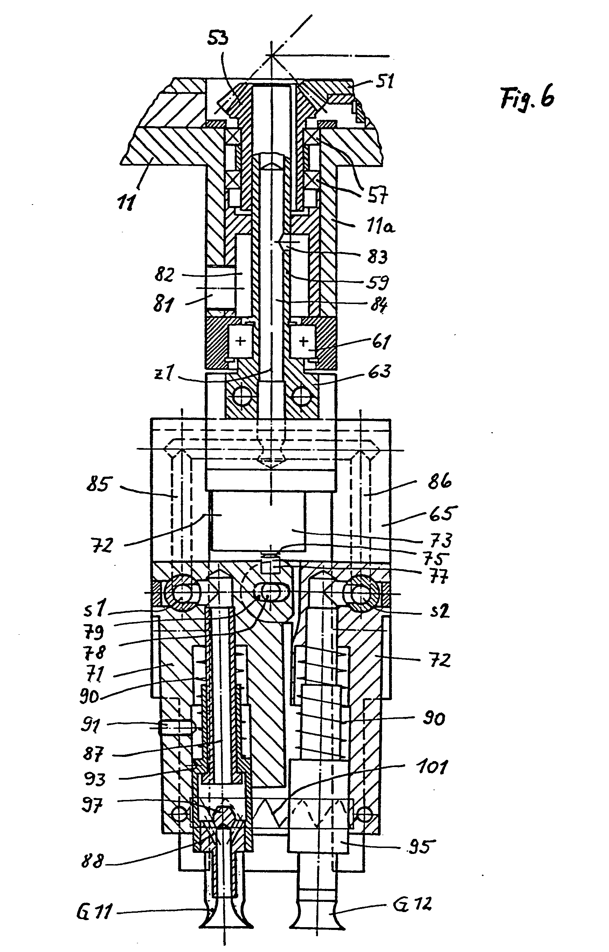

Ein Teil der Anordnung von Fig. 5 ist vergrössert in Fig. 6 wiedergegeben. Es ist erkennbar, dass das zweite Kegelrad 53 über Lager 57 in einem nach unten gerichteten Ansatz 11a des Führungsblocks 11 drehbar gelagert ist. Die Drehbewegung des Kegelrads 53 wird auf eine mit diesem verbundene rohrförmige Welle 59 übertragen, die in einem Lager 61 drehbar gelagert ist und unten in einer Halterung 63 endet, die mit dem Greiferkopf 65 verbunden ist. An dem Greiferkopf 65 sind auf zwei parallelen, waagrechten Achsen s1 und s2 Greiferarme 71 und 72 verschwenkbar gelagert, die an ihren unteren Enden die Greifer G11 und G12 tragen. In dem Greiferkopf 65 ist ferner ein über einen Einlass 72 pneumatisch oder hydraulisch zu beaufschlagender Zylinder 73 angeordnet, dessen Kolben über einen Stössel 75 nach unten auf ein Druckstück 77 wirkt, das an der Oberseite des Greiferarms 71 angeordnet ist und auf der Drehachse z1 des Rohrs 59 angeordnet ist. Im Bereich der Achse z1 sind ausserdem die beiden Greiferarme 71 und 72 über einen Führungszapfen 78 und ein Langloch 79 aneinander angelenkt. Wenn somit durch Betätigung des Zylinders 73 der Stössel 75 auf das Druckstück 77 drückt, verschwenken die Greiferarme 71 und 72 aus der in Fig. 6 dargestellten Lage um die Achsen s1 und s2, so dass die am unteren Ende angeordneten Greifer G11 und G12 voneinanderweg wandern, also ihren gegenseitigen Abstand vergrössern. Zur Begrenzung der seitlich nach aussen gerichteten Schwenkbewegung der Greifer ist ein nicht dargestellter Endanschlag vorgesehen, der beispielsweise auf die Greiferarme 71 und 72 wirkt. Um die Greifer G11 und G12 nach dem Aufhören des Drucks des Stössels 75 wieder in die Ausgangsstellung zurückzuziehen, ist zwischen den Greiferarmen 71 und 72 eine Rückstellfeder 101 angeordnet.

Wie Fig. 6 ferner zeigt, sind die Greifer G11 und G12 als Sauger ausgebildet, die also die zu verarbeitenden Pralinen mittels Unterdruck halten. Zu diesem Zweck ist innerhalb des Greiferkopfs 65 ein durchgehender Vakuumkanal vorgesehen. Dieser beginnt mit einer Anschlussstelle 81 für eine Vakuumleitung an dem nicht verdrehbaren unteren Ansatz 11a des Führungsblocks 11. Die Vakuumzuführung ist also in einfacher Weise möglich. Innerhalb der Vakuumzuführungsstelle 81 ist innerhalb des unteren Ansatzes 11a des Führungsblocks 11 eine Vakuumkammer 82 vorgesehen, durch die die drehbare rohrförmige Welle 59 hindurchgeführt ist. Über eine oder mehrere Durchgangsöffnungen 83 steht die Kammer 82 mit dem Innenraum 84 der rohrförmigen Welle 59 in Verbindung. Die soweit gebildete Vakuumleitung teilt sich innerhalb des Greiferkopfs 65 in zwei Teilkanäle 85 und 86 auf, die durch die Drehachsen s1 und s2 hindurch in die Greiferarme 71 und 72 führen. In dem Greiferarm 71 ist in der Schnittdarstellung der Vakuumkanal 87 erkennbar. Die Sauger G11 und G12 sind an Saugerhaltern 95 angebracht, in die von oben der Vakuumkanal 87 mündet und die nach unten über weitere Vakuumkanäle 88 mit den Saugern G11 und G12 in Verbindung stehen. Ein an der Anschlussstelle 81 angelegtes Vakuum gelangt also auf dem beschriebenen Weg an die Sauger G11 und G12, damit diese Pralinen aus den Zuführbahnen Z1 ... aufnehmen und in die Trays T1 ... überführen und dort nach Abschalten des Vakuums freigeben können.

Mit der beschriebenen Anordnung ist trotz einer feststehenden Vakuumzuführungsstelle 81 somit ein beliebiges Verdrehen des Greiferkopfs 65 mit den Greifern G11 und G12 möglich, wobei ausserdem gleichzeitig auch der Abstand zwischen den Greifern G11 und G12 verändert werden kann, um beispielsweise eng nebeneinander liegend ankommende Pralinen aus den Zuführbahnen Z1 ... in einer verdrehten Stellung mit grösserem Abstand in den Trays T1 abzulegen. Dabei ist es möglich, zwei gleiche Artikel aus einer Zuführbahn Z1 zu überführen oder zwei verschiedene Artikel aus zwei benachbarten Zuführbahnen Z1, Z2. Durch die Verwendung zweier Greifer oder Sauger G11, G12 wird somit die Einlegeleistung verdoppelt.

Zur Begrenzung der durch die Feder 101 bewirkten Rückstellbewegung kann zwischen den Greifern G11 und G12 ein Anschlag vorgesehen sein, der beispielsweise durch eine Schraube einstellbar sein kann, so dass der grösste und der kleinste gegenseitige Abstand der Greifer G11, G12 einstellbar ist.

Die Zuführung des Betriebsdrucks für den Betätigungszylinder 73 für die Spreizbewegung der Greifer G11 und G12 kann, ebenso wie die Zuführung des Vakuums für die Sauger, durch feststehende Leitungen von dem Führungsblock 11 her erfolgen oder durch eine freiliegende Leitung, die an der Anschlussstelle 72 in den Zylinder 73 mündet. Statt mittels Überdruck könnte der Zylinder 73 auch mittels Unterdruck betätigt werden, wozu von der Vakuumzuführungsstelle 81 entsprechende Leitungen zu dem Zylinder 73 vorzusehen wären. Hierdurch würde aber die Steuerung komplizierter, weil Unterdruck für die Sauger G11, G12 zum Aufnehmen und Halten der Pralinen zu anderen Zeiten benötigt wird als ein Unterdruck am Zylinder 73 zum Verschwenken der Greiferarme 71 und 72 für die Abstandsänderung der Greifer G11 und G12.

Fig. 6 zeigt ferner, dass die Greifer oder Sauger G11, G12 innerhalb der Greiferarme 71 und 72 in etwa lotrechter Richtung verschiebbar gelagert und durch Druckfedern 90 abgestützt sind. Hierdurch wird nicht nur erreicht, dass die Greifer oder Sauger sanft auf die Pralinen aufsetzen, sondern insbesondere lässt sich mit dieser Anordnung der Greifer G11 in einer angehobenen Stellung arretieren, indem ein in dem Greiferarm 71 angeordneter Arretierstift 91 zum Eingriff in eine Ausnehmung 93 am oberen Ende des Saugerhalters 95 gebracht wird. In dieser angehobenen, arretierten Stellung ist der Greifer G11 dadurch wirkungslos, dass gleichzeitig ein in dem Saugerhalter 95 vorgesehenes Dichtelement, beispielsweise ein Dichtkegel 97 oder eine Dichtkugel von unten zur Anlage gegen das untere offene Ende des Vakuumrohres 87 in dem Greiferarm 71 kommt und somit den Vakuumkanal absperrt. Auf diese Weise ist eine einfache Umstellung der Arbeitsweise (Doppelsauger oder Einzelsauger) möglich. Der Sauger G11 muss lediglich von Hand nach oben in die Arretierungsstellung gedrückt werden, wo er selbsttätig einrastet.

Mit der beschriebenen Vorrichtung ist es somit möglich, die einzelnen Einlegeeinheiten E1 ... schmal zu bauen und mit engen gegenseitigen Abständen anzuordnen, gleichzeitig aber Dreh- und Spreizanordnungen für die Greifer an den Einlegeeinheiten unterzubringen, und zwar sowohl mit den zugehörigen Drehantrieben als auch mit den zugehörigen Zuleitungen für Saug- oder Druckluft.

Durch die Möglichkeit, bei einer Doppelgreiferanordnung gemäss Fig. 6 einen der Greifer G11 in einer angehobenen Stellung zu arretieren, ist es auf einfache Weise möglich, die Vorrichtung beispielsweise für das Füllen grosser oder kleiner Packungen umzustellen. Bei kleinen Packungen wird lediglich der Sauger oder Greifer G11 nach oben gedrückt, wodurch das Ansaugen von Nebenluft durch diesen Greifer verhindert ist, so dass mit dem anderen Greifer G12 Pralinen sicher angehoben und gehalten werden können. Das Einrasten und Absperren des Greifers G11 in angehobener Stellung ist auch vorteilhaft für die Verarbeitung von Pralinen unterschiedlicher Höhe, da hierbei durch den stillgelegten Greifer G11 keine Pralinen erfasst werden und somit mit dem andern Greifer G12 Pralinen wechselnder Höhe verarbeitet werden können. Andererseits ist es auch bei Betrieb beider Greifer oder Sauger G11 und G12 möglich, Pralinen unterschiedlicher Höhe zu verarbeiten, weil die Greifer G11 und G12 in lotrechter Richtung aufgrund der Ausgleichsfedern 90 verschiebbar sind. Hierdurch ist sichergestellt, dass keine der beiden zu verarbeitenden Pralinen beschädigt oder beim Aufnehmen oder Absetzen in ungewollter Weise verschoben wird.

Statt des zur Abstandsveränderung der Greifer G11 und G12 dienenden Zylinders 73 kann auch ein Elektromotor vorgesehen sein. In beiden Fällen ist es möglich, dieses Stellorgan vorzuprogrammieren, so dass insgesamt durch die Anordnung gemäss Fig. 5 und Fig. 6 einerseits der Drehwinkel der Greifer für die Verdrehung der Pralinen und andererseits der Abstand zwischen den Greifern G11 und G12 für die Aufnahme und für das Absetzen der Pralinen frei programmierbar ist. Die Erfindung schafft also insgesamt eine ausserordentlich flexible Einlegevorrichtung für Pralinen, in der Standardbauteile weitgehend frei zu kombinieren und einzubauen sind.

## Patentansprüche

1. Vorrichtung zum Einlegen von Pralinen (P1, P2...) in die Formvertiefungen von Packungseinsätzen (T1, T2...), die hintereinander auf einer Förderbahn (F) transportiert werden, mit mehreren parallel nebeneinander verlaufenden, für Pralinen jeweils einer Sorte bestimmten Zuführbahnen (Z1, Z2...) und mit mehreren längs und quer zu den Zuführbahnen (Z1, Z2...) verschiebbaren Einlegeeinheiten (E1, E2...) mit Greifern (G1, G2...) zum Entnehmen von Pralinen aus den Zuführbahnen (Z1, Z2...) und zum Überführen und Einlegen jeder dieser Pralinen in eine ihr zugeordnete Formvertiefung, wobei jeder Greifer (G1, G2...) mindestens in zwei zueinander senkrechten Richtungen (x, y) beweglich angeordnet ist, von denen die erste Richtung (y) in Richtung der Zuführbahnen (Z1, Z2...) und die zweite Richtung (x) quer dazu verläuft, und wobei die den jeweiligen Einlegeorten entsprechenden Endpunkte der Einlegebewegung der Greifer (G1, G2...) in diesen beiden Richtungen (x, y) mittels einer Programmsteuerung für jeden Greifer (G1, G2...) einzeln frei programmierbar sind, so dass die Stellung der Pralinen im Packungseinsatz (Packungsspiegel) vorwählbar ist, dadurch gekennzeichnet, dass die zweite Bewegungsrichtung (x) der Greifer (G1, G2...) in Richtung der Förderbahn (F) verläuft, dass die Einlegeeinheiten (E1, E2...) derart zusammengefasst sind, dass ihre Greifer (G1, G2...) gleichzeitig einem einzigen Packungseinsatz (T2) zugeordnet sind, und dass die Greifer (G1, G4) der in der Richtung (x) der Förderbahn (F) äusseren Einlegeeinheiten (E1, E4) derart gegenüber denjenigen der in dieser Richtung inneren Einlegeeinheiten (E2, E3) versetzt angeordnet sind, dass die Greifer (G1, G2...) in den beiden zueinander senkrechten Richtungen (x, y) bis auf die Abstände der Einlegeorte im Packungseinsatz (T2) aufeinander zu bewegbar sind.

2. Vorrichtung nach Anspruch 1, dadurch gekennzeichnet, dass auch die den Entnahmestellungen der Pralinen (P1, P2...) auf den Zuführbahnen (Z1, Z2...) entsprechenden Anfangspunkte der Bewegung der Greifer (G1, G2...) einzeln frei programmierbar sind.

3. Vorrichtung nach Anspruch 1 oder 2, dadurch gekennzeichnet, dass jede Einlegeeinheit (E1, E2...) je einen Motor (M1x, M1y, M2x, M2y...) für die Bewegung der Greifer (G1, G2...) in je einer der beiden Richtungen (x, y) trägt.

4. Vorrichtung nach Anspruch 3, dadurch gekennzeichnet, dass jede Einlegeeinheit (E1, E2...) vom Bereich über dem Ende der zugeordneten Zuführbahn (Z1, Z2...) bis über die der Zuführbahn abgewandte Seite des Packungseinsatzes (T1, T2...) hinweg reicht und dass der Greifer (G1, G2...) mittels eines der Motoren (M1y, M2y...) längs der Einlegeeinheit (E1, E2...) in der ersten Richtung (y) bewegbar angeordnet ist.

5. Vorrichtung nach Anspruch 4, dadurch gekennzeichnet, dass für den Greifer (G1, G2...) ein Zahnriemenantrieb an der Einlegeeinheit (E1, E2...) vorgesehen ist.

6. Vorrichtung nach Anspruch 3, dadurch gekennzeichnet, dass jede Einlegeeinheit (E1, E2...) als Ganzes mit dem zugehörigen Greifer (G1, G2...) mittels des zweiten Motors (M1x, M2x...) in der zweiten Richtung (x) bewegbar angeordnet ist.

7. Vorrichtung nach einem der vorhergehenden Ansprüche, dadurch gekennzeichnet, dass die Breite der Einlegeeinheiten (E1, E2...) in der zweiten Richtung (x) etwa gleich dem Abstand zwischen zwei Reihen (R1, R2...) von Formvertiefungen der Packungseinsätze (T1, T2...) ist.

8. Vorrichtung nach einem der vorhergehenden Ansprüche, dadurch gekennzeichnet, dass die Einlegeeinheiten (E1, E2...) derart miteinander verschachtelt sind, dass vorragende Teile, wie Antriebsmotoren (M...) jeweils vor dem Anfang oder hinter dem Ende der Bewegungsbahn der Greifer (G1, G2...) in der ersten Richtung (y) oder oberhalb oder unterhalb der benachbarten Einlegeeinheit (E1, E2...) angeordnet sind, und/oder dass die Führungen (31) für die Einlegeeinheiten (E1, E2...) zueinander versetzt sind.

9. Vorrichtung nach einem der vorhergehenden Ansprüche, dadurch gekennzeichnet, dass die Greifer (G1, G2...) an den Einlegeeinheiten (E1, E2...) zusätzlich lotrecht bewegbar und/oder um ihre lotrechte Achse (z1, z2...) drehbar angeordnet sind.

10. Vorrichtung nach Anspruch 9, dadurch gekennzeichnet, dass die lotrechte Bewegung und/oder die Drehbewegung ebenfalls durch die Programmsteuerung für jeden Greifer (G1, G2...) einzeln frei programmierbar ist.

11. Vorrichtung nach einem der vorhergehenden Ansprüche, dadurch gekennzeichnet, dass pro Einlegeeinheit (E1, E2...) mehrere Greifer (G1, G2...) vorgesehen sind, die jeweils in der ersten Richtung (y) und der zweiten Richtung (x) gegenüber ihrer Einlegeeinheit (E1, E2...) bewegbar angeordnet sind und deren Bewegung jeweils einzeln mittels der Programmsteuerung frei programmierbar ist.

12. Vorrichtung nach einem der vorhergehenden Ansprüche, dadurch gekennzeichnet, dass für den Drehantrieb des Greifers (G11, G12) an der Einlegeeinheit (E1) ein weiterer Stellmotor (M1w) vorgesehen ist, dass der Greifer (G11, G12) an einem längs der Einlegeeinheit (E1) auf Führungsstangen (13, 13a) verschiebbaren Führungsblock (11) um seine lotrechte Achse (z1) verdrehbar gelagert ist, dass eine der Führungsstangen (13a) für den Führungsblock (11) drehbar an der Einlegeeinheit (E1) gelagert und mit dem Stellmotor (M1w) verbunden ist, und dass diese drehbare Führungsstange (13a) über ein Getriebe (Kegeltrieb 51, 53) mit dem drehbaren Greifer (G11, G12) verbunden ist.

13. Vorrichtung nach einem der vorhergehenden Ansprüche, dadurch gekennzeichnet, dass mehrere, insbesondere zwei Greifer (G11, G12) an einem gemeinsamen Greiferkopf (65) um parallele waagrechte Achsen (s1, s2) verschwenkbar derart gelagert sind, dass der gegenseitige Abstand der Aufnahmeenden der Greifer (G11, G12) veränderbar ist, und dass zum Verschwenken der Greifer (G11, G12) ein auf diese einwirkendes Betätigungsorgan (73, 75) vorgesehen ist.

14. Vorrichtung nach Anspruch 13, dadurch gekennzeichnet, dass das Betätigungsorgan ein pneumatisch oder hydraulisch beaufschlagter Zylinder (73) mit einem Stössel (75) ist, der mit Abstand von den Schwenkachsen (s1, s2) an den Greifern (G11, G12) angreift und dass zur Begrenzung der Schwenkbewegung der Greifer (G11, G12) mindestens ein einstellbarer Anschlag vorgesehen ist.

15. Vorrichtung nach Anspruch 14, dadurch gekennzeichnet, dass die Greifer (G11, G12) als Sauger ausgebildet sind und dass in dem Greiferkopf (65) ein Vakuumkanal (81...88) angeordnet ist, der sich von einer Vakuumanschlussstelle (81) bis zur Mündung der Sauger erstreckt.

16. Vorrichtung nach einem der vorhergehenden Ansprüche, dadurch gekennzeichnet, dass der Vakuumkanal (81...88) sich auch durch die Drehachse (59) der Greifer (G11, G12) bzw. des Greiferkopfs (65) hindurch erstreckt.

17. Vorrichtung nach einem der vorhergehenden Ansprüche, dadurch gekennzeichnet, dass die Greifer (G11, G12) in lotrechter Richtung einzeln gefedert (90) gelagert sind und dass mindestens einer der Greifer (G11) in angehobener Stellung unter Absperrung des Vakuumkanals (87) arretierbar ist.

## Claims

1. Device for depositing pralines (P1, P2...) into the shaped depressions of package inserts (T1, T2...) which are conveyed consecutively on a conveying path (F), comprising a plurality of feed paths (Z1, Z2...) extending parallel to each other and each intended for pralines of a particular sort and with a plurality of insert units (E1, E2...) displaceable longitudinally and transversely of the feed paths (Z1, Z2...) and having grippers (G1, G2...) for removing pralines from the feed paths (Z1, Z2...) and for transferring to and depositing each of said pralines in a shaped depression allocated thereto, each gripper (G1, G2...) being arranged movable at least in two directions (x, y) perpendicular to each other, the first direction (y) extending in the direction of the feed paths (Z1, Z2...) and the second direction (x) extending transversely thereof, and the end points, corresponding to the respective insert locations, of the insertion movement of the grippers (G1, G2...) in said two directions (x, y) being individually freely programmable by means of a program control for each gripper (G1, G2...) so that the position of the pralines in the package insert (package image) is preselectable, characterized in that the second movement direction (x) of the grippers (G1, G2...) extends in the direction of the conveying path (F), that the insert units (E1, E2...) are combined in such a manner that their grippers (G1, G2...) are allocated simultaneously to a single package insert (T2), and that the grippers (G1, G4) of the outer insert units (E1, E4), seen in the direction (x) of the conveying path (F), are arranged offset with respect to those of the inner units (E2, E3), seen in said direction, in such a manner that the grippers (G1, G2...) in the two directions (x, y) perpendicular to each other are movable towards each other up to the spacings of the insert locations in the packing insert (T2).

2. Device according to claim 1, characterized in that the starting points of the movement of the grippers (G1, G2...) corresponding to the removal positions of the pralines (P1, P2...) on the feed paths (Z1, Z2...) are also individually freely programmable.

3. Device according to claim 1 or 2, characterized in that each insert unit (E1, E2...) carries a motor (M1x, M1y, M2x, M2y...) for the movement of the grippers (G1, G2...) in each of the two directions (x, y).

4. Device according to claim 3, characterized in that each insert unit (E1, E2...) extends from the region over the end of the associated feed path (Z1, Z2...) beyond the side of the package insert (T1, T2...) remote from the feed path and that the gripper (G1, G2...) is arranged movably by means of one of the motors (M1y, M2y...) along the insert unit (E1, E2...) in the first direction (y).

5. Device according to claim 4, characterized in that a toothed belt drive is provided on the insert unit (E1, E2...) for the gripper (G1, G2...).

6. Device according to claim 3, characterized in that each insert unit (E1, E2...) is arranged movable in the second direction (x) as a unit with the associated gripper (G1, G2...) by means of the second motor (M1x, M2x...).

7. Device according to any one of the preceding claims, characterized in that the width of the insert units (E1, E2...) in the second direction (x) is substantially equal to the distance between two rows (R1, R2...) of shaped depressions of the package inserts (T1, T2...).

8. Device according to any one of the preceding claims, characterized in that the insert units (E1, E2...) are nested in each other in such a manner that projecting parts, such as drive motors (M...), are arranged in each case before the start or after the end of the movement path of the grippers (G1, G2...) in the first direction (y) or above or below the adjacent insert unit (E1, E2...), and/or that the guides (31) for the insert units (E1, E2...) are offset with respect to each other.

9. Device according to any one of the preceding claims, characterized in that the grippers (G1, G2...) are arranged on the insert units (E1, E2...) additionally vertically movable and/or pivotal about their vertical axis (z1, z2...).

10. Device according to claim 9, characterized in that the vertical movement and/or pivotal movement is also individually freely programmable by the program control for each gripper (G1, G2...).

11. Device according to any one of the preceding claims, characterized in that per insert unit (E1, E2...) a plurality of grippers (G1, G2...) is provided which are arranged movably in the first direction (y) and the second direction (x) with respect to their insert unit (E1, E2...) and the movement of which is in each case individually freely programmable by means of the program control.

12. Device according to any one of the preceding claims, characterized in that for the rotary drive of the gripper (G11, G12) on the insert unit (E1) a further servo motor (M1w) is provided, that the gripper (G11, G12) is mounted pivotally about its vertical axis (z1) on a guide block (11) displaceable along the insert unit (E1) on guide rods (13, 13a), that one of the guide rods (13a) for the guide block (11) is pivotally mounted on the insert unit (E1) and connected to the servo motor (M1w), and that said pivotal guide rod (13a) is connected via a gearing (bevel gearing 51, 53) to the rotatable gripper (G11, G12).

13. Device according to any one of the preceding claims, characterized in that several, in particular two, grippers (G11, G12) are pivotally mounted on a common gripper head (65) about parallel horizontal axes (s1, s2) in such a manner that the mutual spacing of the pickup ends of the grippers (G11, G12) is variable, and that for pivoting the grippers (G11, G12) an actuating member (73, 75) acting thereon is provided.

14. Device according to claim 13, characterized in that the actuating member is a pneumatically or hydraulically operated cylinder (73) with a push member (75) which engages the grippers (G11, G12) at a distance from the pivot axes (s1, s2), and that for limiting the pivot movement of the grippers (G11, G12) at least one adjustable stop is provided.

15. Device according to claim 14, characterized in that the grippers (G11, G12) are constructed as suction members and that in the gripper head (65) a vacuum passage (81...88) is provided which extends from a vacuum connection point (81) up to the mouth of the suction members.

16. Device according to any one of the preceding claims, characterized in that the vacuum passage (81...88) also extends through the pivot axis (59) of the grippers (G11, G12) or the gripper head (65).

17. Device according to any one of the preceding claims, characterized in that the grippers (G11, G12) are individually spring mounted (90) in the vertical direction and that at least one of the grippers (G11) can be arrested in the raised position with blocking of the vacuum passage (87).

**Revendications**

1. Dispositif destiné à placer des pralines (P1, P2) dans des cavités moulées dans des éléments d'emballage (T1, T2...) qui sont transportés l'un derrière l'autre sur une bande transporteuse (F), comportant plusieurs pistes (Z1, Z2...) d'alimentation disposées parallèlement, destinées à des pralines d'une sorte dans chaque cas, et plusieurs unités de mise en place (E1, E2) susceptibles d'être déplacées longitudinalement et transversalement par rapport aux pistes (Z1, Z2...) d'alimentation, munies de dispositifs de préhension (G1, G2) destinés à prélever des pralines sur les pistes (Z1, Z2...) d'alimentation et à transférer et à mettre en place chacune de ces pralines dans une cavité moulée qui lui est destinée, chaque dispositif de préhension (G1, G2...) étant disposé de façon à pouvoir se déplacer au moins dans deux directions perpendiculaires (x, y), dont la première (y) s'étend dans la direction des pistes d'alimentation (Z1, Z2...) et la deuxième (x) s'étend transversalement à cette dernière, et les points finaux, correspondant aux points de mise en place considérés, du mouvement de mise en place des dispositifs de préhension (G1, G2...) dans ces deux directions (x, y), peuvent être programmés individuellement de façon libre, si bien que la position des pralines dans l'élément d'emballage (plateau d'emballage) peut être choisie à l'avance, caractérisé par le fait que la deuxième direction (x) de déplacement des dispositifs de préhension (G1, G2...) s'étend dans la direction de la piste d'alimentation (F), que les unités de mise en place (E1, E2...), sont rassemblées de telle façon que leurs dispositifs de préhension (G1, G2) sont affectés simultanément à un seul élément d'emballage (T2), et que les dispositifs de préhension (G1, G4) des unités de mise en place (E1, E4) externes, situées dans la direction (x) de la piste d'alimentation (F), sont disposés avec un décalage tel, par rapport à ceux des unités de mise en place (E2, E3) internes situées dans cette direction, que les dispositifs de préhension (G1, G2...) peuvent se déplacer en direction les uns des autres dans les deux directions (x, y) perpendiculaires l'une à l'autre, en préservant entre eux un écart égal aux écarts entre les points de mise en place de l'élément (T2) d'emballage.

2. Dispositif selon la revendication 1, caractérisé par le fait que l'on peut aussi programmer individuellement de façon libre les points de départ du mouvement des dispositifs de préhension (G1, G2...) correspondant aux emplacements de prélèvement des pralines (P1, P2...) sur les pistes (Z1, Z2...) d'alimentation.

3. Dispositif selon la revendication 1 ou 2, caractérisé par le fait que chaque unité de mise en place (E1, E2...) supporte un moteur (M1x, M1y, M2x, M2y...) destiné à chacun des déplacements des dispositifs de préhension (G1, G2...) dans chacune des deux directions (x, y).

4. Dispositif selon la revendication 3, caractérisé par le fait que chaque unité de mise en place (E1, E2...) s'étend de la zone située au dessus de l'extrémité de la piste d'alimentation (Z1, Z2...), qui lui est affectée, jusqu'au dessus du côté de l'élément d'emballage tourné à l'opposé de la piste d'alimentation, et que le dispositif de préhension (G1, G2...) est disposé de façon à pouvoir être déplacé au moyen d'un des moteurs (M1y, M2y...) le long de l'unité de mise en place (E1, E2...) dans la première direction (y).

5. Dispositif selon la revendication 4, caractérisé par le fait que l'on prévoit, sur l'unité de mise en place (E1, E2...), un entraînement par courroie dentée destiné aux dispositifs de préhension (G1, G2...).

6. Dispositif selon la revendication 3, caractérisé par le fait que chaque unité de mise en place (E1, E2...) est disposée de façon à pouvoir se déplacer dans son ensemble, avec le dispositif de préhension (G1, G2...) correspondant, au moyen du deuxième moteur (M1x, M2x) dans la deuxième direction (x).

7. Dispositif selon une des revendications précédentes, caractérisé par le fait que la largeur des unités de mise en place (E1, E2...) dans la deuxième direction est approximativement égale à la distance (x) entre deux rangées (R1, R2...) de cavités moulées des éléments d'emballage (T1, T2...).

8. Dispositif selon une des revendications précédentes caractérisé par le fait que les unités de mise en place (E1, E2...) sont disposées entre elles en damier de telle façon que les parties qui dépassent, telles que les moteurs d'entraînement (M...), sont disposées dans chaque cas avant le début ou après la fin du trajet de déplacement des dispositifs de préhension (G1, G2...) dans la première direction (y) ou au dessus ou au dessous de l'unité de mise en place (E1, E2...) voisine, et/ou que les organes de guidage (31) destinés aux unités (E1, E2...) de mise en place sont décalés les uns par rapport aux autres.

9. Dispositif selon une des revendications précédentes, caractérisé par le fait que les dispositifs de préhension (G1, G2...) des unités de mise en place (E1, E2...) sont disposés de façon à pouvoir en outre se déplacer verticalement et/ou peuvent pivoter sur leurs axes verticaux (z1, z2...).

10. Dispositif selon la revendication 9, caractérisé par le fait que le mouvement vertical, et/ou le mouvement de rotation peut également être programmé à volonté individuellement par le dispositif de commande de programmation destiné à chaque dispositif de préhension (G1, G2...).

11. Dispositif selon une des revendications précédentes, caractérisé par le fait que l'on prévoit, par unité de mise en place (E1, E2...), plusieurs dispositifs de préhension (G1, G2) qui sont disposés de façon à pouvoir dans chaque cas se déplacer par rapport à leur unité de mise en place (E1, E2...) dans la première direction (y) et dans la deuxième direction (x), et dont le déplacement peut dans chaque cas être programmé à volonté au moyen du dispositif de commande de programmation.

12. Dispositif selon une des revendications précédentes, caractérisé par le fait que l'on prévoit, sur l'unité de mise en place (E1) pour l'entraînement rotatif du dispositif de préhension (G11, G12), un moteur de positionnement supplémentaire (M1w), que le dispositif de préhension (G11, G12) est monté de façon à pouvoir tourner sur son axe vertical (z1) contre un bloc (11) de guidage susceptible de coulisser le long de l'unité de mise en place (E1) sur des barres de guidage (13, 13a), qu'une des barres de guidage (13a) destinée au bloc (11) de guidage est montée sur l'unité de mise en place (E1) de façon à pouvoir tourner et est reliée au moteur de positionnement (M1w), et que cette barre de guidage (13a) montée rotativement est reliée par un système d'engrenages (train d'engrenages coniques 51, 53) aux dispositif de préhension (G11, G12) montée rotativement.

13. Dispositif selon une des revendications précédentes, caractérisé par le fait que plusieurs, en particulier deux, dispositifs de préhension (G11, G12) sont montés sur une tête (65) de dispositifs de préhension commune de manière à pouvoir pivoter sur des axes horizontaux parallèles (S1, S2), de telle façon que l'écart entre les extrémités de préhension des dispositifs de préhension (G11, G12) soit modifiable, et qu'il soit prévu un organe d'actionnement (73, 75) agissant sur les dispositifs de préhension (G11, G12) pour les faire pivoter.

14. Dispositif selon la revendication 13, caractérisé par le fait que l'organe d'actionnement est un cylindre (73) sous pression hydraulique ou pneumatique comportant une tige-poussoir (75) qui agit sur les dispositifs de préhension (G11, G12) en un endroit écarté par rapport aux axes de pivotement (s1, s2), et que, pour la limitation du mouvement de pivotement des dispositifs de préhension (G11, G12), il est prévu au moins une butée réglable.

15. Dispositif selon la revendication 14, caractérisé par le fait que les dispositifs de préhension (G11, G12) sont constitués par des suceurs et que dans la tête (65) de dispositifs de préhension il est disposé un canal à vide (81...88) s'entendant depuis un point de raccordement (81) de vide jusqu'au débouché du suceur.

16. Dispositif selon une des revendications précédentes, caractérisé par le fait que le canal à vide (81 ... 88) s'étend aussi dans l'axe de rotation (59) des dispositifs de préhension (G11, G12), respectivement de la tête (65) de dispositifs de préhension.

17. Dispositif selon une des revendications précédentes, caractérisé par le fait que les dispositifs de préhension (G11, G12) sont montés individuellement sur ressort (90) dans la direction verticale et qu'au moins un des dispositifs (G11) peut être arrêté en position autre, en fermant le canal à vide (87).

Fig. 1

0163092

Fig. 2

Fig. 3

# Fig.4

Fig. 5

E1

11 13 17 54

18 M1y 55 55 53 51 56 z1 13a 15 55 M1w

65 73

s1 s2

y

71 72

G11 G12

21 0163092

Fig. 6